# FASCICULE DE BREVET EUROPEEN

(11) **EP 0 508 874 B1**
(45) Date de publication et mention de la délivrance du brevet: **18.06.1997**
(21) Numéro de dépôt: 92400954.1
(22) Date de dépôt: 06.04.1992
(51) Int. Cl.: B23K 11/31

(54) **Installation de commande d'un outillage comportant une pince destinée à effectuer une opération déterminée sur des pièces, le déplacement relatif de la pince par rapport auxdites pièces étant commandé par un système de positionnement automatique**
Werkzeugsteueranlage bestehend aus einer Schweisszange zur Durchführung von bestimmten Arbeiten an Werkstücken und aus einem automatischen Positionierungsystem zur Steuerung der relativen Bewegung der Schweisszange in Beziehung zu diesem Werkstück
Tool control apparatuus containing a welding clamp to realize a particular operation on workpieces, and also an automatic positioning system to control the relative displacement of the welding clamp with respect to these workpieces

(30) Priorité: 08.04.1991 FR 9104250
(43) Date de publication de la demande: 14.10.1992
(73) Titulaire: ARO, F-72500 Château-du-Loir (FR)
(72) Inventeur: Boyer, Jean-Noel, F-37390 Mettray (FR)
(74) Mandataire: Picard, Jean-Claude Georges

(56) Documents cités:
- FR-A- 2 585 976
- GB-A- 2 230 221
- US-A- 4 694 135

## Description

La présente invention concerne une installation de commande d'un outillage comportant une pince destinée à effectuer une opération déterminée sur des pièces, le déplacement relatif de la pince par rapport auxdites pièces étant commandé par un système de positionnement automatique, et plus particulièrement une installation de ce type comportant une unité de commande de ladite opération, une unité d'asservissement propre à commander principalement l'ouverture et la fermeture de ladite pince par l'intermédiaire de moyens moteurs, une unité de commande dudit système de positionnement, à laquelle est intégrée ladite unité d'asservissement, et un capteur propre à fournir une information représentative du déroulement de ladite opération.

L'outillage à pince ou autres organes de serrage pourra être constitué par exemple d'une pince de soudage électrique par points, d'un outil d'emboutissage ou encore de sertissage ou d'agrafage, ou de tout autre outil du même type dans lequel deux organes coopérants du type à mâchoires articulées ou guidées doivent à un moment donné se rapprocher de la ou des pièces à traiter ou à assembler puis s'en écarter et être transférés en un autre emplacement de travail. Le système de positionnement automatique pourra être constitué d'un robot, d'un manipulateur, commandés par un automate programmable, ordinateur, commande numérique ou analogue.

On a mentionné plus haut un déplacement relatif de la pince par rapport aux pièces. Cela signifie que si le robot transporte les pièces, l'outillage à pince est fixé au sol, et que si le robot transporte au contraire l'outillage, la ou les pièces sont fixes par rapport au sol.

Quant aux moyens moteurs précités, asservis en position, Ils pourront être constitués d'un vérin pneumatique asservi, d'un vérin hydraulique asservi ou d'un moteur électrique asservi associé à un système mécanique.

Cette dernière technique a été en particulier décrite dans les demandes de brevet suivantes, déposées au nom de la demanderesse :
- demande de brevet français FR-A-2585976 du 9 août 1985 ;
- demande de brevet européen EP-A-0278185 du 11 février 1987 ;
- demande de brevet français FR-A-2652024 du 20 septembre 1989.

Pour exposer le problème que la présente invention vise à résoudre, on va décrire ci-dessous les deux techniques actuellement connues dans le type d'installation susdéfini, en supposant qu'il s'agit de commander une pince à souder par résistance équipée d'un vérin électrique asservi.

Cette description va être faite avec référence aux figures 1 à 3b des dessins ci-annexés dans lesquels:
- la figure 1 représente schématiquement, de profil, une pince de soudage par points équipée d'un vérin électrique à vis ;
- la figure 2a représente un premier mode de branchement entre la pince, le système de positionnement automatique (robot) et les unités de commande, respectivement de soudage et de positionnement ;
- la figure 2b représente un second branchement de ces parties de l'installation ;
- la figure 3a montre la trajectoire des électrodes de soudage dans le cas du branchement de la figure 2a ; et
- la figure 3b montre une trajectoire possible de ces électrodes dans le cas du branchement de la figure 2b.

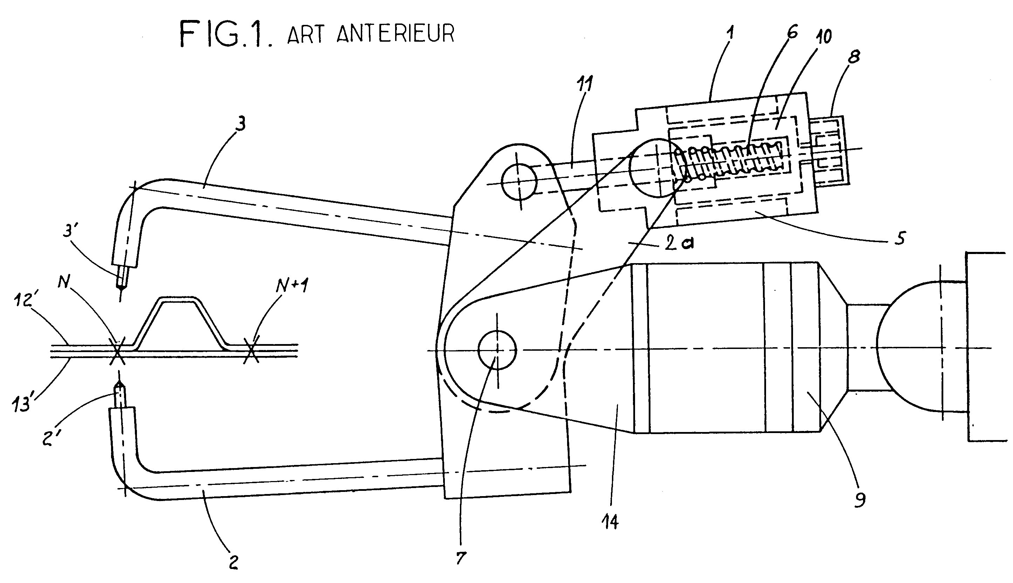

La figure 1 représente une pince de soudage équipée d'un vérin électrique 1. La pince est dite en X, car elle comporte une articulation, en 7. Cette pince est constituée d'un bras porte-électrode supérieur 3 et d'un bras porte-électrode inférieur 2. Ces deux bras sont articulés l'un par rapport à l'autre autour de l'axe précité 7. L'un des deux bras peut être relié au berceau fixe de pince 14 par un système de détalonnage ou d'autocentrage tel que celui qui est décrit dans la demande de brevet français FR-A-2652024 du 20 septembre 1989. Le vérin électrique 1 est relié d'une part au bras 3 par sa tige 11, d'autre part au bras 2 par son stator 5 et le levier de liaison 2a. Le vérin électrique est constitué d'un moteur électrique dont le rotor 10 reçoit l'écrou d'un système écrou/vis à billes 6 permettant de transformer le mouvement rotatif du moteur en translation de la tige 11. Le moteur comporte un capteur de position 8 de type résolver ou autre (incrémental, potentiométrique, etc.), permettant de renseigner le système de commande sur la position angulaire du rotor, et autorisant ainsi l'asservissement en position et en vitesse de l'ensemble moteur et vis à billes. D'autres capteurs propres à l'application (mesure d'effort, de courant, d'accélération, etc.) peuvent être installés.

Dans l'exemple décrit, la pince est fixée sur le poignet 9 d'un robot qui peut la déplacer, les pièces 12′ et 13′ à souder étant fixes par rapport au sol.

L'ensemble moteur et articulation permet de fermer la pince, c'est-à-dire d'enserrer les tôles 12′ et 13′ entre des électrodes 2′ et 3′ afin de les rapprocher. Lorsqu'un effort suffisant est obtenu, on fait passer un courant à travers la pièce, de sorte à provoquer la formation d'un noyau fondu entre les pièces 12′ et 13′, ce qui permet de réaliser le point d'assemblage N. Lorsque le cycle de soudage est terminé, on commande le moteur pour ouvrir les bras 2 et 3, le système asservi permettant l'obtention d'une ouverture suffisante pour accéder au point suivant N + 1. Lorsque cette ouverture est atteinte, le robot peut déplacer la pince au point suivant et commencer un nouveau cycle de soudage.

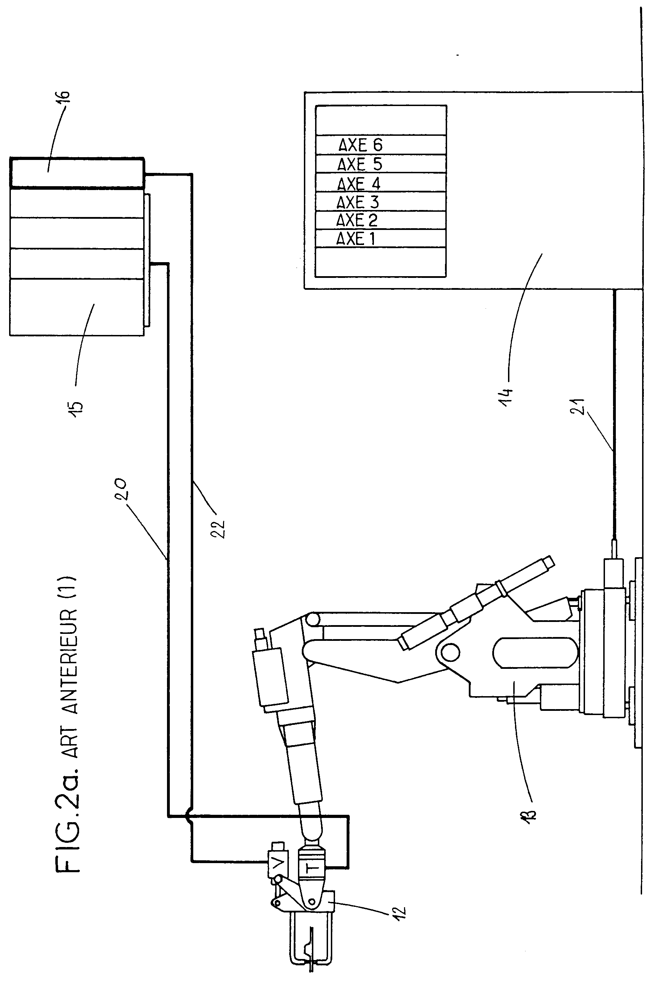

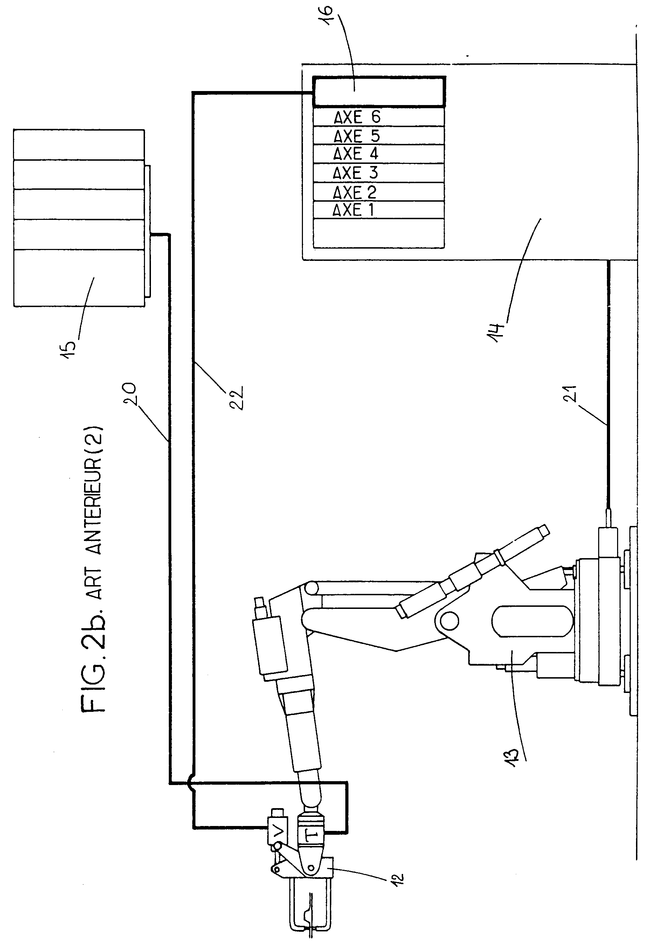

Les figures 2a et 2b montrent une pince 12 montée au bout d'un robot 13, commandé par une unité de commande 14. La pince est reliée à une armoire de soudage 15 (unité de commande de l'opération) permettant de commander le cycle de soudage, c'est-à-dire de contrôler le passage du courant de soudage à travers les pièces à souder.

Concernant l'unité d'asservissement 16 du moteur de pince, deux configurations peuvent se présenter :

**Configuration N° 1** : Elle correspond à la figure 2a, dans laquelle l'unité d'asservissement 16 est Intégrée à l'armoire de soudage 15, ce qui présente de nombreux avantages :
a) Possibilité de synchronisation parfaite entre la position des électrodes, l'effort entre les électrodes et le courant de soudage. Cela se traduit par une réduction des temps de cycle (passage du courant de soudage dès que l'effort est atteint).
b) Amélioration de la qualité (pendant le passage du courant, on est sûr de la valeur de l'effort).
c) Amélioration de la fiabilité (lors de la fermeture de la pince, de nombreux tests peuvent être faits, liés à la distance inter-électrodes : épaisseur de l'empilage de tôles correct ou non, état d'usure des électrodes, etc...).
d) Regroupement de l'ensemble des paramètres de soudage au niveau d'une même unité de commande, d'où une séparation fonctionnelle bien nette entre les parties de soudage et de manipulation (robot).

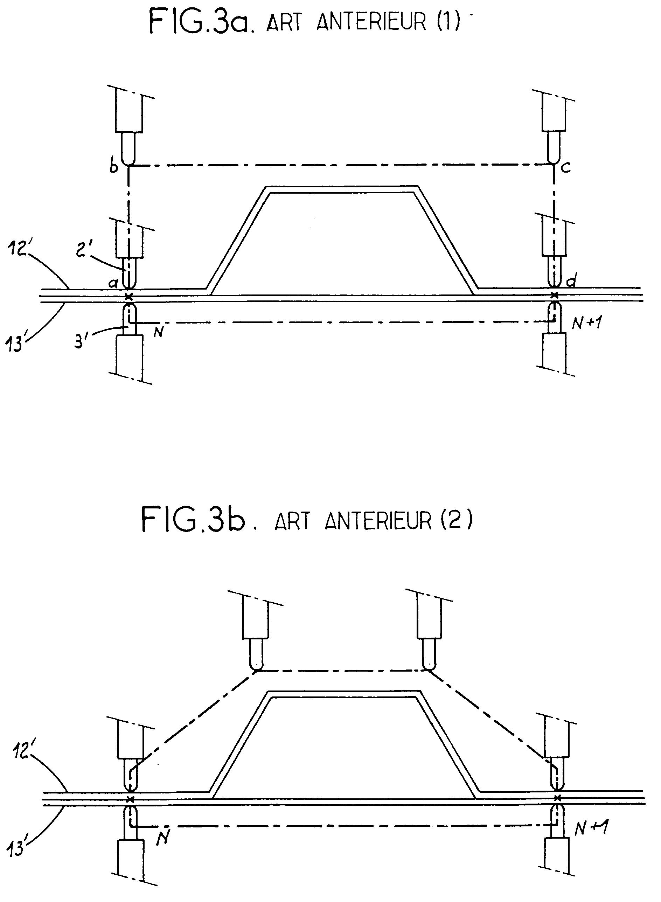

Cette configuration présente par contre un inconvénient lié au fait que l'ouverture de la pince n'est pas commandée par le robot : avant d'autoriser le robot à se déplacer au point suivant, il faut que la pince ait atteint l'ouverture suffisante pour franchir les obstacles séparant les deux points. Cela donne la trajectoire de la figure 3a. Or, le temps nécessaire pour obtenir cette ouverture (portion a-b) s'ajoute au temps du cycle, ce qui pénalise la productivité de l'installation. De même, la fermeture ne peut être commandée que lorsque le robot a atteint la position suivante (point c). Le temps de fermeture (portion c-d) s'ajoute alors au temps de déplacement du robot.

**Configuration N° 2** : Elle correspond à la figure 2b, dans laquelle l'unité d'asservissement 16 est intégrée à l'armoire de commande du robot 14. L'armoire 14 peut alors gérer la pince comme un axe supplémentaire (7ème axe si le robot en comporte déjà 6) et, de ce fait, synchroniser l'ouverture de la pince avec les autres déplacements du robot. Cela donne la trajectoire de la figure 3b. Cette technique présente un avantage Immédiat, qui est que les temps d'ouverture et de fermeture nécessaires pour aller d'un point à un autre seront en tout ou partie masqués par les temps de déplacement du robot, d'où des gains de productivité appréciables. D'autre part, ce concept facilite grandement la programmation sur site par apprentissage du robot.

Par contre, cette méthode comporte les inconvénients mentionnés dans la rubrique "avantages" de la technique précédente :
a) Difficulté de synchronisation entre la position des électrodes, l'effort entre les électrodes et le courant de soudage, ce qui se traduit par un allongement des temps de cycles.
b) Cette difficulté de synchronisation peut aussi se traduire par une détérioration de la qualité.
c) Absence de fonctions spécialisées de tests relatifs à l'opération de soudage : contrôle de l'épaisseur de l'empilage de tôles, contrôle de l'état d'usure de l'électrode, etc.
d) Mélange fonctionnel entre les parties de soudage et de manipulation (robot), ce qui complique les réglages, la mise au point et la maintenance.
e) Nécessité parfois d'effectuer un développement logiciel spécifique au niveau de l'armoire de commande du robot ou du manipulateur pour par exemple pouvoir asservir l'outil en position et en effort.

L'invention objet de la présente demande de brevet a donc pour but de permettre de combiner les deux modes de commande susdécrits de la pince à souder ou analogue, afin de cumuler leurs avantages sans en avoir les inconvénients.

Pour ce faire, une installation du type général défini au début sera, conformément à la présente invention, essentiellement caractérisée en ce que ladite unité de commande de ladite opération comporte une unité d'asservissement supplémentaire, et en ce qu'est prévu en outre un commutateur commandé par ledit capteur :
- d'une part pour que l'ouverture et la fermeture de ladite pince pendant l'opération soient commandées par l'unité d'asservissement supplémentaire de ladite unité de commande de ladite opération ;
- et d'autre part pour que l'ouverture et la fermeture de ladite pince soient commandées par l'unité d'asservissement de ladite unité de commande dudit système de positionnement, pendant une phase de déplacement de ladite pince.

En d'autres termes, on a ainsi réalisé un système mixte de commande d'un outillage à pince ou analoque (par exemple une pince à mâchoires de soudage), fournissant la commande d'ouverture ou de fermeture de la pince, tantôt par l'unité de commande de l'opération (de soudage ou analogue), ceci pendant l'opération concernée, tantôt par l'unité de commande du système de positionnement (robot), ceci pendant les déplacements de la pince.

Ce système mixte permet d'optimiser le cycle complet de réalisation de l'opération en question (par exemple réalisation d'un point de soudure), en synchronisant les mouvements de la pince avec le déplacement provoqué par le système de positionnement, en minimisant les durées d'échanges d'informations entre l'unité de commande du système de positionnement (c'est-à-dire l'armoire du robot) et l'unité de commande de ladite opération (armoire de soudage), en gérant les paramètres de l'opération en question d'une façon qui lui est spécifique, grâce à la spécialisation de cette dernière unité.

Une installation de soudage à pince à électrodes conforme à la présente invention, ainsi que son fonctionnement, vont maintenant être décrits à titre d'exemple nullement limitatif avec référence aux autres figures du dessin ci-annexé dans lequel :

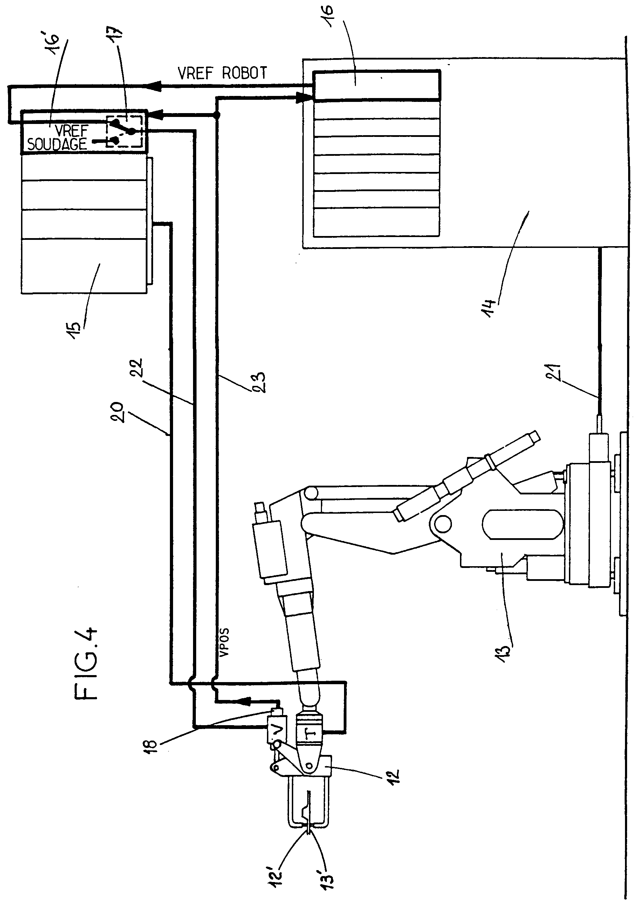

- la figure 4 est une représentation schématique de l'ensemble de l'installation ;

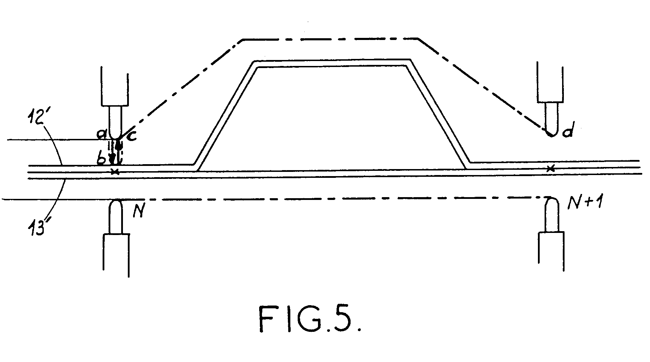

- la figure 5 montre la trajectoire des électrodes de soudage ;

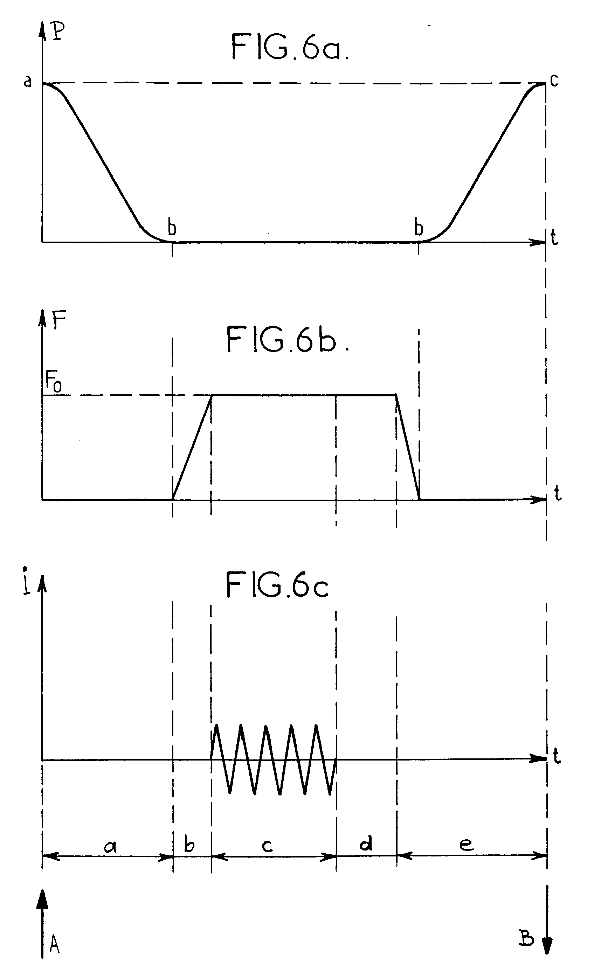

- la figure 6a est un diagramme montrant l'évolution de la position P des électrodes en fonction du temps au cours d'un cycle de soudage ;
- la figure 6b représente l'effort F entre les électrodes en fonction du temps, Fo représentant l'effort de soudage ; et
- la figure 6c représente l'évolution du courant I de soudage en fonction du temps.

Sur la figure 4 on a repris globalement les mêmes références que sur les figures 2a et 2b pour désigner les mêmes parties de l'installation ou des parties ayant la même fonction. Le capteur référencé en 18 peut être constitué par exemple par un résolver fournissant une information sur le déroulement de l'opération concernée, en l'occurrence une opérartion de soudage, notamment quant à la position relative des électrodes. Comme dans le cas des figures 2a et 2b, les pièces à assembler 12′ et 13′ sont fixes par rapport au sol, et la pince 12 est montée sur le poignet du robot 13, qui a été supposé à six axes.

Comme dans le cas des figures 2a et 2b, un faisceau de câbles 20 relie le transformateur T de la pince 12 à une armoire 15 constituant ce que l'on a appelé plus généralement "l'unité de commande de l'opération". Le robot 13, appelé plus généralement "système de positionnement" est quant à lui toujours relié à son unité de commande 14 par un faisceau de câbles 21. L'unité 14 comporte, comme dans le cas de la figure 2b, une unité d'asservissement analogue 16, et l'unité de commande 15 comporte une unité d'asservissement supplémentaire 16′ analogue à celle du mode de réalisation de la figure 2a et reliée au vérin électrique V de commande d'ouverture et de fermeture de la pince par un câble 22 ( les liaisons correspondantes ont également été référencées 22 sur les figures 2a et 2b).

Dans le cas d'une commande mixte, l'unité d'asservissement 16′ comporte la commutation de signaux entre VREF ROBOT et VREF SOUDAGE, etc. De même, l'unité 16 : si la commande n'est pas mixte, l'unité 16 doit être capable de gérer les mouvements et efforts propres à l'application.

Les informations VPOS fournies par le capteur 18 du vérin V sont transmises, par une liaison 23, d'une part à l'unité d'asservissement 16, d'autre part à l'unité d'asservissement supplémentaire 16′. L'interrupteur électronique 17 est agencé pour que le vérin électrique V puisse être commandé soit par l'unité d'asservissement 16, soit par l'unité d'asservissement 16′ (il est à noter que ce vérin électrique pourrait être remplacé par un vérin pneumatique, hydraulique ou hydropneumatique asservi).

Ceci étant, le fonctionnement de cette installation pourra être le suivant: pendant la séquence de soudage, la pince 12 est entièrement commandée par l'armoire de soudage 15. Le cycle complet (fig. 6) comprend : la fermeture de la pince (trajectoire a-b, fig. 5), la mise en pression des électrodes 2′, 3′ avec contrôles associés, la commande du courant I de soudage, le maintien et le retour en petite ouverture de la pince (trajectoire b-c, fig. 5), juste suffisante pour décoller les deux électrodes 2′ et 3′ des tôles à assembler 12′ et 13′. La position "petite ouverture" peut être programmée par l'utilisateur.

A cet instant, la commande de soudage engendre un signal de "fin de cycle" à l'intention du robot 13 et provoque le basculement du commutateur électronique 17 vers le signal de commande VREF en provenance du robot 13. A ce moment, l'armoire 14 du robot prend en charge la commande du moteur V de la pince 12 afin de synchroniser l'ouverture et la fermeture de la pince avec le mouvement du robot pour aller au point N + 1 (trajectoire c-d, fig. 5). Cela permet d'obtenir une trajectoire optimisée et de masquer les temps d'ouverture et de fermeture de la pince par le temps de déplacement du robot. Lorsque le point N + 1 est atteint, la pince 12 se trouvant en position "petite ouverture", le robot 13 s'immobilise et engendre un signal START à l'intention de l'armoire de soudage 15. L'armoire de soudage commande le basculement du commutateur électronique 17 vers le signal VREF SOUDAGE en provenance de l'armoire de soudage elle-même. A partir de cet instant, la pince 12 est commandée par l'armoire de soudage 15 et une nouvelle séquence de soudage peut commencer.

Sur la figure 6c, la commande START précitée se situe en A et la fin du cycle en B, qui correspond au passage de l'asservissement de l'armoire de soudage 15 à l'armoire 14 de commande du robot. La phase a correspond à la fermeture de la pince 12, la phase b à la mise en pression des électrodes, la phase c au temps de passage du courant de soudage, la phase d au maintien de la pression, et la phase e à l'ouverture des électrodes.

On pourrait également envisager que la commutation entre VREF SOUDAGE et VREF ROBOT soit obtenue automatiquement dès lors que l'ouverture de pince est supérieure ou inférieure à une valeur préprogrammée dite "petite ouverture". Cela présenterait l'avantage de réduire encore le temps de cycle.

Il y a lieu de noter en outre que le commutateur 17 pourrait aussi faire partie de l'unité d'asservissement 16 au lieu de faire partie de l'unité d'asservissement supplémentaire 16′. Ce commutateur peut être de type électronique, électromécanique, optique ou autre.

## Revendications

1. Installation de commande d'un outillage comportant une pince destinée à effectuer une opération déterminée sur des pièces, le déplacement relatif de la pince par rapport auxdites pièces étant commandé par un système de positionnement automatique, cette installation comportant une unité (15) de commande de ladite opération, une unité (16) d'asservissement propre à commander principalement l'ouverture et la fermeture de ladite pince par l'intermédiaire de moyens moteurs, une unité (14) de commande dudit système de positionnement (13), à laquelle est intégrée ladite unité d'asservissement, et un capteur (18) propre à fournir une information représentative du déroulement de ladite opération, caractérisée en ce que ladite unité (15) de commande de ladite opération comporte une unité d'asservissement supplémentaire (16'), et en ce qu'est prévu en outre un commutateur (17) commandé par ledit capteur (18) :
- d'une part pour que l'ouverture et la fermeture de ladite pince pendant l'opération soient commandées par l'unité d'asservissement supplémentaire (16') de ladite unité (15) de commande de ladite opération ;
- et d'autre part pour que l'ouverture et la fermeture de ladite pince soient commandées par l'unité d'asservissement (16) de ladite unité de commande dudit système de positionnement (13), pendant une phase de déplacement de ladite pince.

2. Installation selon la revendication 1, caractérisée en ce que ledit commutateur (17) fait partie de ladite unité d'asservissement supplémentaire (16').

3. Installation selon la revendication 1, caractérisée en ce que ledit commutateur (17) fait partie de ladite unité d'asservissement (16).

4. Installation selon l'une quelconque des revendications 1 à 3, caractérisée en ce que ladite opération à effectuer sur des pièces est une opération de soudage, la pince (12) comportant deux électrodes de soudage (2', 3').

5. Installation selon l'une quelconque des revendications 1 à 3, caractérisée en ce que ladite opération à effectuer sur des pièces est une opération de sertissage, d'emboutissage ou d'agrafage.

6. Installation selon l'une quelconque des revendications précedentes, caractérisée en ce que lesdits moyens moteurs (1,V) sont constitués par un vérin électrique à vis.

7. Installation selon l'une quelconque des revendications 1 à 5, caractérisée en ce que lesdits moyens moteurs sont constitués par un vérin pneumatique, hydraulique ou hydropneumatique asservi.

8. Installation selon l'une quelconque des revendications précédentes, caractérisée en ce que ladite unité (14) de commande dudit système de positionnement est constituée par une armoire de commande d'un robot (13).

9. Installation selon l'une quelconque des revendications 1 à 7, caractérisée en ce que ladite unité (14) de commande dudit système de positionnement est constituée par une commande numérique, un automate programmable, un ordinateur ou analogue.

10. Installation selon l'une quelconque des revendications précédentes, caractérisée en ce que ledit commutateur (17) est de type électronique, électromécanique ou optique.

## Claims

1. An installation for controlling tooling that includes a clamp for the purpose of performing a particular operation on workpieces, relative displacements between the clamp and said workpieces being controlled by an automatic positioning system, said installation including a unit (15) for controlling said operation, a servo-control unit (16) suitable for controlling mainly the opening and closing of said clamp via drive means, a unit (14) for controlling said positioning system (13), to which said servo-control unit is integrated, and a sensor (18) suitable for providing information relating to progress of said operation, the installation being characterized in that said servo-control unit (16) is integrated in the unit (14) for controlling the positioning system, in that said unit (15) for controlling said operation includes an additional servo-control unit (16'), and in that a switch (17) is also provided under the control of said senor (18):
firstly to ensure that during said operation the opening and the closing of said clamp are under the control of said additional servo-control unit (16') of the said unit (15) for controlling said operation; and
secondly to ensure that during the displacement stage of said clamp, the opening and the closing of said clamp are under the control of said servo-control unit (16) of said unit for controlling said positioning system (13).

2. An installation according to claim 1, characterized in that said switch (17) forms a portion of said additional servo-control unit (16').

3. An installation according to claim 1, characterized in that said switch (17) forms a portion of said servo-control unit (16).

4. An installation according to any one of claims 1 to 3, characterized in that said operation to be performed on workpieces is a welding operation, the clamp (12) including two welding electrodes (2', 3').

5. An installation according to any one of claims 1 to 3, characterized in that said operation to be performed on the workpieces is a crimping, stamping, or stapling operation.

6. An installation according to any preceding claim, characterized in that said drive means (1, V) are constituted by an electric screw actuator.

7. An installation according to any one of claims 1 to 5, characterized in that said drive means are constituted by a servo-controlled hydropneumatic, or hydraulic, or pneumatic actuator.

8. An installation according to any preceding claim, characterized in that said unit (14) for controlling said positioning system is constituted by a cabinet for controlling a robot (13).

9. An installation according to any one of claims 1 to 7, characterized in that said unit (14) for controlling said positioning system is constituted by a numerical control system, a programmable controller, a computer, or the like.

10. An installation according to any preceding claim, characterized in that said switch (17) is an electronic switch, an electromechanical switch, or an optical switch.

## Patentansprüche

1. Steuerungssystem für eine Bearbeitungseinrichtung, die eine Zange zur Ausführung einer Bearbeitungsoperation an Werkstücken aufweist, wobei eine Ortsverlagerung der Zange gegenüber den Werkstücken durch ein automatisches Positionierungssystem gesteuert ist,
dieses Steuerungssystem umfassend:
eine Steuereinheit (15) für die Bearbeitungsoperation,
eine Steuerbaugruppe (16), in erster Linie bestimmt und geeignet zur motorischen Öffnungs- und Schließsteuerung der Zange,
ein Steuergerät (14) zur Steuerung des Positionierungssystems (13),
wobei die Steuerbaugruppe (16) in das Steuergerät (14) integriert ist,
ferner umfassend:
eine Sensorik (18) zur Lieferung von Informationen über den Ablauf der Bearbeitungsoperation,
**dadurch gekennzeichnet,**
daß die Steuereinheit (15) für die Steuerung der Bearbeitungsoperation eine Zusatzsteuerbaugruppe (16') umfaßt
und daß außerdem ein von der Sensorik (18) gesteuerter Schalter (17) vorgesehen ist, dieser Schalter (17) dazu bestimmt:
um einerseits die Öffnung bzw. Schließung der Zange während der Bearbeitungsoperation unter Vermittlung der Zusatzsteuerbaugruppe (16') der Steuereinheit (15) zu steuern;
und um andererseits die Öffnung bzw. Schließung der Zange unter Vermittlung der Steuerbaugruppe (16) des Steuergeräts (14) des Positionierungssystems (13) während einer Ortsverlagerungsphase der Zange zu steuern.

2. Steuerungssystem nach Anspruch 1,
**dadurch gekennzeichnet,**
daß der Schalter (17) ein Teil der Zusatzsteuerbaugruppe (16') ist.

3. Steuerungssystem nach Anspruch 1,
**dadurch gekennzeichnet,**
daß der Schalter (17) ein Teil der Steuerbaugruppe (16) ist.

4. Steuerungssystem nach einem der Ansprüche 1 bis 3,
**dadurch gekennzeichnet,**
daß die Bearbeitungsoperation eine Schweißoperation ist, wobei die Zange (12) zwei Schweißelektroden (2', 3') umfaßt.

5. Steuerungssystem nach einem der Ansprüche 1 bis 3,
**dadurch gekennzeichnet,**
daß die Bearbeitungsoperation eine Quetsch-, Zieh- oder Klammerungsoperation ist.

6. Steuerungssystem nach einem der vorangegangenen Ansprüche,
**dadurch gekennzeichnet,**
daß zum motorischen Antrieb der Zange ein elektrischer Schraubtrieb vorgesehen ist.

7. Steuerungssystem nach einem der Ansprüche 1 bis 5,
**dadurch gekennzeichnet,**
daß zum motorischen Antrieb ein pneumatischer, hydraulischer oder hydropneumatischer Antrieb vorgesehen ist.

8. Steuerungssystem nach einem der vorangegangenen Ansprüche,
**dadurch gekennzeichnet,**
daß das Steuergerät (14) des Positionierungssystems von einem Steuerschrank eines Roboters (13) gebildet ist.

9. Steuerungssystem nach einem der Ansprüche 1 bis 7,
**dadurch gekennzeichnet,**
daß das Steuergerät (14) des Positionierungssystems von einer numerischen Steuerung, einem programmierbaren Automaten, einem Rechner oder etwas analogem gebildet ist.

10. Steuerungssystem nach einem der vorangegangenen Ansprüche,
**dadurch gekennzeichnet,**
daß der Schalter (17) ein elektronischer, elektromechanischer oder optischer Schalter ist.
